# EUROPEAN PATENT APPLICATION

(11) **EP 0 997 487 A1**
(43) Date of publication of application: **03.05.2000**
(21) Application number: 98308858.4
(22) Date of filing: 29.10.1998
(51) Int. Cl.: C08G 63/06, C08G 63/08, C08G 18/42

(54) **Copolymers of e-caprolactone and cyclic esters of alpha-hydroxyacids and polyurethanes derivable from these polymers**

(71) Applicant: SOLVAY (Société Anonyme), 1050 Bruxelles (BE)
(72) Inventor: Dutton, Amanda Jane, Warrington, Cheshire WA5 3SE (GB); Derbyshire, Stewart, Chester, Cheshire CH3 5XQ (GB); Wasson, Robert Craig, Barnston, Wirral L60 2TB (GB)
(74) Representative: Howard, Paul Nicholas

(57) **Abstract**

Pourable polymers having desirable properties are obtained by co-polymerising
(a) a lactone or corresponding aliphatic hydroxyacid
(b) cyclic dimeric ester of an α-hydroxyacid or the corresponding α-hydroxyacid,
in which the mole ratio of (a) to (b) is greater than 1.5 : 1 and their viscosity is less than 2000cps.

The polymers can further be reacted with isocyanates to form polyurethanes having desirable properties.

## Description

The present invention relates to co-polymers of caprolactone and the cyclic ester of an α -hydroxyacid. It further relates to polyurethanes derived therefrom.

Polyurethanes are high volume plastics which find uses in a wide variety of applications. One of the chief reasons for this is that, by varying the method of manufacture and the starting materials used, then the properties exhibited by the finished polyurethane such as solvent and heat resistance, chemical resistance, tensile strength, abrasion resistance, elasticity, can vary widely. Polyurethanes can for example be found in shock absorbers, insulating wires, as adhesives in the automotive and aircraft industry, and also as biodegradable materials during surgical procedures. As examples of this the following literature can be cited.

US Patent 4,089,747 discloses the use of diisocyanate, poly(ε-caprolactone-co-glycol), alkanediol in the preparation of a polyurethane adhesive.

US Patent 3,660,357 discloses polyurethane adhesives prepared from, poly(ε-Caprolactone)s of molecular mass 1,800 to 2,200, aromatic diisocyanate, alkylene glycols with 2 to 10 carbons.

In JP 6-209990 polyurethane sealing media are used for sealing artificial organs, where the polyurethanes are prepared from polyisocyanate and polyol, and where the polyol comprises the -C(O)-CH(CH3)-O- group. The polymers produced according to this patent are deficient in the following respects regarding polyurethane production. The polyols described contain an ether linkage which will render the resulting polyurethane vulnerable to degradation by sunlight, especially ultra-violet radiation, and therefore unsuitable for use in polymers predominantly intended for use outdoors. Moreover, the elastic properties of the polyurethane, such as breaking strain, are inadequate.

EP-A-0,635,531 teaches caprolactone / lactide random co-polymers of 55 - 70% by mole lactide and 45 - 30% by mole caprolactone for use in the pharmaceutical industry. The further use of these co-polymers in the manufacture of polyurethanes is however, for the following reasons, unsatisfactory. First, although the polymers formed are liquids, their viscosity is far too high to be of practical use. Secondly, the colour of the polymers is unacceptable.

It has been found however that by carefully controlling the relative amounts of the reagents and the reaction conditions used, a polymer can be formed which overcomes the above problems.

One route of producing polyurethanes is by means of the so-called pre-polymer method. This often involves treating a preformed polymeric polyol with excess of polyisocyanate, whereby substantially all of the hydroxy groups are reacted, resulting in a pre-polymer with isocyanate end groups. The excess polyisocyanate may then be removed and the isocyanate-capped pre-polymer further reacted with chain extender to increase the chain length of the polyurethane. It will be recognised that this method has a number of advantages over others such as the one-pot method. For example, by selection of the monomers used in the formation of the polyol pre-polymer, and of its chain length, then the properties of the final polyurethane can be tailored to suit the requirements of the producer. Furthermore, manufacture is facilitated as the hazardous isocyanate monomer may not be present during the processing stage.

Well known as polyol pre-polymers are those polyesters formed from ε-Caprolactone and from ε-Caprolactone / short chain alkanepolyol. These typically have molecular weights of 1,000 to 10,000. They suffer from potential drawbacks however. First, they are usually solid materials, which brings problems of processing during use. Second, the pre-polymers tend to increase in viscosity and become turbid on standing for prolonged periods. This is a particularly relevant problem where the pre-polymer is prepared at a site separate from its final use. These problems can be overcome by means either of heating the pre-polymer before use, for example to 80C, until it is clear, or by maintaining the pre-polymer at an elevated temperature from the time of its production until it is used. Although these alternatives rarely impair the properties of the final product, they obviously result in increased energy consumption, and can also result in loss of time.

It is an object of one aspect of the current invention to provide a pre-polymer for polyurethanes which overcomes or ameliorates one or more of these problems.

A problem with the polyurethanes themselves is that of cold hardening. After having been cast into the desired form, the hardness of many polyurethanes can be observed to continue to increase, especially when stress is being applied to the finished product, a process often known as cold hardening. This can be attributed to an increase in crystallinity which is usually observed at the same time. In uses where continued elasticity of the polyurethane is a critical factor, it would be of great advantage if this tendency could be reduced.

It is a further object to provide polyurethane polymers prepared from a pre-polymer comprising caprolactone and lactide monomer units which exhibit a reduced tendency to cold harden.

Polyurethanes are particularly suitable for use as adhesives. They have almost universal applicability as they combine good surface contact properties with the reactivity of the isocyanate group to all surfaces containing bound or absorbed water. Here in effect, the curing process takes place in situ, between the surfaces to be bonded together. The pre-polymer method, outlined above, may be employed here.

The conditions under which the polyurethanes are formed, obviously depends upon the use to which it is being put and is at the discretion of the user. The form of the pre-polymer is important. In order to be suitable for manufacturing polyurethanes, it must be of sufficiently low viscosity to be capable of being mixed with the other reagents. It is also highly preferable that the pre-polymer be colourless.

According to the present invention, there is provided a pourable liquid polymer selected from co-polymers of
(a) a lactone or corresponding aliphatic hydroxyacid, and
(b) cyclic dimeric ester of an α hydroxyacid or the corresponding α-hydroxyacid,
characterised in that the mole ratio of (a) lactone or corresponding aliphatic hydroxyacid to (b) cyclic dimeric ester of an α-hydroxyacid or the corresponding α-hydroxyacid is greater than 1.5 : 1 and that the viscosity is less than 2000cps.

According to a further aspect of the invention there is provided a process for the synthesis of such polymers wherein the reactants from (a) lactone or corresponding aliphatic hydroxyacid, (b) cyclic dimeric ester of an α-hydroxyacid or the corresponding α-hydroxyacid, together with an alkanepolyol initiator are reacted together in the presence of a catalyst at a temperature of from between 120 to 200C, characterised in that the mole ratio of lactone or corresponding aliphatic hydroxyacid to cyclic dimeric ester of an α-hydroxyacid or the corresponding α-hydroxyacid is greater than 1.5 : 1 and that the mixture contains sufficient initiator that the viscosity of the polymer produced is less than 2000cps.

As examples of lactones or the corresponding aliphatic hydroxyacids can be given the ω-hydroxy acids of general formula HO-(CH₂)ₙ-CO₂H, where n is an integer from 1 to 17. These hydroxyacids are preferably employed in the form of their corresponding lactone. The use of lactones of ω-hydroxy acids containing 5 - 7 carbon atoms are preferred. Caprolactone is particularly preferred. As examples of cyclic dimeric ester of an α-hydroxyacid or the corresponding α-hydroxyacid, can be given, D,L-lactide, L-lactide, D-lactide, glycolide, lactic acid, or glycolic acid. A preferred compound is L-lactide. The initiator is normally present in an amount such that the polyol pre-polymer formed has the desired molecular mass. The exact amount will depend on the initiator employed, but will often be selected within the mole ratio range of 15:1 to 60:1. In a number of favourable instances, the mole ratio will be selected in the range of 15:1 to 25:1.

The initiators are present in the form of polyhydroxy compounds or polyamines. Preferred are diamines or polyhydroxy compounds with a molecular mass of less than 350 Daltons. Suitable diamines which can be used are 3,3'-dichloro-4,4' -diaminodiphenylmethane, 4,4' -diaminodiphenylmethane, 1,4-diaminobenzene, 3,3' dimethoxy-4,4'-diaminobiphenyl, 3,3'-dimethyl-4,4'-diaminobiphenyl, 4,4'-diaminobiphenyl, and 3,3'-dichloro-4,4'-diaminobiphenyl. Suitable polyhydroxy compounds include, diols such as ethylene glycol, propylene glycol, 1,3-propanediol, 1,4-butanediol, 1,5-pentanediol, neopentyl glycol, 1,6-hexanediol, 3-methyl-1,5-pentanediol, 1,9-nonanediol, diethylene glycol, dipropylene glycol, polyethylene glycols, polypropylene glycols, polyethylene adipate, polybutylene adipate, polycaprolactonediol, polycarbonatediol, cis-2-butene-1,4-diol, 1,4-butynediol, 1,4-dihydroxy-1,2,3,4-tetrahydronaphthalene, 1,5-bis(β-hydroxyethoxy)naphthalene, α,α'-dihydroxyxylene, and polyhydric alcohols such as trimethylolpropane, hexanetriol, pentaerythritol, sorbitol, sucrose, and tri-alkanolamines.

The polycondensation reaction between the low molecular weight polyol and the hydroxyacid or lactone is usually catalyzed either by amines or metal carboxylates. Examples of suitable catalysts are triphenylphosphine oxide, 1,4-diaza(2,2,2)bicyclooctane, tetramethylbutanediamine, triethylenediamine, dibutyltin dilaurate, stannous octanoate and stannous 2-ethylhexanoate. The catalyst is typically present in an amount of from between about 1 to about 25ppm. An amount of from between 2 to about 10ppm is preferred.

The reactants are vacuum sparged together, typically at 60 - 100C, preferably at 70 - 90C prior to the addition of the catalyst. The duration of sparging is at the discretion of the process operator. It often continues for up to 6 hours, but is preferably for a period of between 1 hour and 2 hours. Catalyst is added after sparging has finished and the temperature of the reaction mixture then increased to a temperature of from 120 - 200C, preferably 150 -185C. The reaction mixture can be kept at this temperature for a period of up to 72 hours, but a period selected in the range of 15 - 35 hours is preferable and more preferably from 18 to 22 hours. The exact time can depend in part upon the extent to which the reaction mixture was initially sparged. After cooling, the polyol polymer thus formed is ready to be reacted further and thereby incorporated into the polyurethane molecule.

According to a yet further aspect of the current invention there is provided a polyurethane derivable from co-polymers of
(a) a lactone or corresponding aliphatic hydroxyacid, and
(b) cyclic dimeric ester of an α hydroxyacid or the corresponding α-hydroxyacid,
said co-polymers then being reacted with one or more polyisocyanates, characterised in that the mole ratio of lactone or corresponding aliphatic hydroxyacid to cyclic dimeric ester of an α-hydroxyacid or the corresponding α-hydroxyacid is greater than 1.5 : 1 and that the viscosity of the co-polymer is less than 2000cps.

According to a still yet further aspect of the invention there is provided a process for the preparation of such a polyurethane wherein a polyol is reacted with a polyisocyanate in the presence of a chain extender and a catalyst at elevated temperature, characterised in that the polyol is a co-polymer of
(a) a lactone or corresponding aliphatic hydroxyacid, and
(b) cyclic dimeric ester of an α hydroxyacid or the corresponding α-hydroxyacid,
(c) an alkanepolyol initiator
and that the mole ratio of lactone or corresponding aliphatic hydroxyacid to cyclic dimeric ester of an α-hydroxyacid or the corresponding α-hydroxyacid in the co-polymer is greater than 1.5 : 1 and that the mixture contains sufficient initiator that the viscosity of the polyol is less than 2000cps.

The preparation of the polyurethane polymer usually involves reacting a polyol pre-polymer with excess of polyisocyanate, preferably at an elevated temperature of 60 - 100C, more preferably at 70 - 90C. In a number of embodiments, the polyol is first heated to the desired elevated temperature, and the polyisocyanate, at ambient temperature, then added and the mixture warmed up over a period of up to 24 hours, with heat being removed or added by means of a suitable heating and cooling system. It is important that the selected polyol exhibit appropriate flow characteristics to allow thorough and adequate mixing. If the polyols are such that the other reagents are unable to mix with them completely and so react with the polyol molecules, then this will result in incomplete utilisation of the monomers employed in polyurethane synthesis and, moreover, poor heat transfer within the reaction solution. Although polyols with a viscosity of up to 2000cps can be employed in the formation of the polyurethanes according to the present invention, those with viscosities of up to 1000cps, such as 500 to 1000cps are preferred. The mixture is then degassed, with occasional mixing, at this temperature in a vacuum oven. The vacuum is released by using nitrogen, or other inert gas. The gas can be dried before being released into the oven. A polyfunctional chain extender is then usually added to the mixture under a dry inert gas blanket. The gas used is conveniently nitrogen. The polyfunctional chain extender is usually a low molecular weight amine or a polyhydroxy compound with a molecular mass of less than 350 Daltons. The chain extender may be selected from the list of compounds given above as being suitable for use as initiators in the formation of the polyol. Chain extenders selected from the group comprising polyhydroxy compounds are preferred. On addition of the chain extender, the reaction mix is stirred carefully but thoroughly to ensure complete mixing of the reactants, and then once more degassed, before being covered with an inert gas blanket. The mixture can then be transferred to a mould where reaction is continued for a period to be determined by the operator. The temperature and duration of this step will be determined by the properties which are sought in the finished polyurethane product.

By a polyisocyanate is meant a molecule which contains two or more isocyanate groups. Examples of this include triphenylmethane-4,4',4''-triisocyanate, tris-(4-isocyanatophenyl)-thiophosphate, 2,4-diisocyanatotoluene (TDI), 2,6-diisocyanatotoluene (TDI), 4,4'-diisocyanato-diphenylmethane (MDI), 2,4'-diisocyanatodiphenylmethane, 2,2'-diisocyanatodiphenylmethane, 1,6-diisocyanatohexane, 1-isocyanato-3-isocyanatomethyl-3,5,5-trimethylcyclohexane (IPDI), 1,5-diisocyanatonaphthalene(NDI), 1,4-phenylenediisocyanate, 4,4'-diisocyanatodicyclohexylmethane (H12MDI), dichlorodiphenylmethane diisocyanate, bibenzyldiisocyanate, diphenylether diisocyanates, and bitolylene diisocyanates.

The choice of polyisocyanate to be used will of course dictate the characteristics of polyurethane produced, and the use to which it can be put. So for example, products made from 1,6-diisocyanatohexane are light stable, temperature and saponification resistant. Those prepared from 4,4'-diisocyanatodiphenylmethane are used for the formation of rigid foams, and as binders for sand-castings, chipboard and other glues.

Of these, polyisocyanates with two isocyanate groups per molecule are preferred. 4,4'-diisocyanato-diphenylmethane, and toluene diisocyanate are especially preferred.

In polyurethanes a certain amount of rigidity is imparted to the polymer by the reaction of the isocyanate with the so-called urethane chain extenders. These chain extenders can take the form of low molecular weight diamines or polyhydroxy compounds as described above for the initiators in the preparation of the polyol.

It is also possible, and in some cases desirable to include two or more different polyisocyanates in the same polyurethane molecule. This can be done in order to modify the properties of the resulting polyurethane, or simply to reduce the overall costs of the manufacturing process by using a mixture of isomers such as in the case of 2,4- and 2,6-diisocyanatotoluene.

Having described the invention in general terms, specific embodiments thereof are described in greater detail by way of example only.

### Determination of Viscosity of Polyol Pre-polymers

This determination was carried out using a Haake PK100 viscometer at 30°C, 100 S⁻¹ shear rates with 5cm spindle, 1° cone angle.

### Preparations of Poly (ε-Caprolactone/lactide) polyol co-polymer according to the invention

### Example 1

ε-Caprolactone (668.5g), L-lactide (286.48g), and 1,4-butandiol (45.06g), were charged to a suitable reactor. These were then sparged under vacuum for 120 minutes at 80C, after which stannous octoate (1ml of a solution of 0.064g stannous octoate in 20ml toluene) was added. The reagents were then heated to 180C and left to react for 23 hours 30 minutes.

The resulting co-polymer was an amorphous pourable liquid with a T_{g} of-49.8°C, and an Mₙ of 2178, and had a viscosity of below 2000cps.

### Example 2

ε-Caprolactone (372.7g), L-lactide (200. 54g), and 1,4-butandiol (27.04g), were charged to a suitable reactor. These were then sparged under vacuum for 60 minutes at 80C, after which stannous octoate (1ml of a solution of 0.064g stannous octoate in 20ml toluene) was added. The reagents were then heated to 180C and left to react for 23 hours 20 minutes.

The resulting co-polymer was an amorphous pourable liquid with a T_{g} of-45°C and an Mₙ of 2237 and had a viscosity of below 2000cps.

### Example 3

ε-Caprolactone (716.2g), L-lactide (238.7g), and 1,4-butandiol (45.07g), were charged to a suitable reactor. These were then sparged under vacuum for one and a half hours at 80C, after which stannous octoate (1ml of a solution of 0.064g stannous octoate in 20ml toluene) was added. The reagents were then heated to 180C and left to react for 20 hours 40 minutes.

The resulting co-polymer was an amorphous pourable liquid with a T_{g} of-53°C and an Mₙ of 2137 and had a viscosity of below 2000cps.

### Example 4

ε-Caprolactone (655.8g), L-lactide (164.0g), and 1,4-butandiol (180.24g), were charged to a suitable reactor. These were then sparged under vacuum for one and a half hours at 80C, after which stannous octoate (1ml of a solution of 0.064g stannous octoate in 20ml toluene) was added. The reagents were then heated to 180C and left to react for 22 hours.

The resulting co-polymer was an amorphous liquid with a T_{g} of-57°C and an Mₙ of 500.

### Preparations of Poly (ε-Caprolactone/lactide ) polyol co-polymer not according to the invention

### Comparison 1

ε-Caprolactone (640.2g), L-lactide (344.7g), and 1,4-butandiol (15.02g), were charged to a suitable reactor. These were then sparged under vacuum for one and a half hours at 80C, after which stannous octoate (1ml of a solution of 0.064g stannous octoate in 20ml toluene) was added. The reagents were then heated to 180C and left to react for 31 hours 40 minutes.

The resulting co-polymer was an amorphous non-pourable liquid with a T_{g} of-35°C and an Mₙ of 7250 and had a viscosity of greater than 600cps.

### Comparison 2

ε-Caprolactone (689.8g), L-lactide (295.5g), and 1,4 butandiol (15.02g), were charged to a suitable reactor. These were then sparged under vacuum for one and a half hours at 80C, after which stannous octoate (1ml of a solution of 0.064g stannous octoate in 20ml toluene) was added. The reagents were then heated to 180C and left to react for 30 hours 5 minutes.

The resulting co-polymer was an amorphous non-pourable amorphous liquid with a T_{g} of-42.4C and an Mₙ of 6989 and had a viscosity of greater than 600cps.

### Preparation of Polyurethane according to the invention

The polyurethane can be prepared by a number of methods. Below is given an example where the method of choice is the pre-polymer route.

### Example 5

Polyol (188.22g) (0.188g moles OH) at 80C, was weighed into a 500ml solids bottle. 44MS grade flake 4,4'-diisocyanatodiphenylmethane (90g) (0.72 moles NCO) at ambient, was then added, weighed into the bottle and the components thoroughly admixed. The isocyanate was then allowed to warm up overnight. The mixture was degassed in a vacuum oven at 80C for one hour, with occasional remixing (the vacuum was released with nitrogen). Dry nitrogen blanketed butane-1,4-diol (21.78g) (0.48g moles per OH) was then added. The mix is stirred carefully to ensure complete mixing of the butane-1,4-diol, and again degassed and blanketed with nitrogen. Reaction is then continued until a polyurethane of the desired characteristics is formed.

## Claims

1. A pourable liquid polymer whose monomers comprise
(a) a lactone or corresponding aliphatic hydroxyacid
(b) cyclic dimeric ester of an α-hydroxyacid or the corresponding α-hydroxyacid,
characterised in that the mole ratio of lactone or corresponding aliphatic hydroxyacid to cyclic dimeric ester of an α-hydroxyacid or the corresponding α-hydroxyacid is greater than 1.5 : 1 and that the viscosity is less than 2000cps.

2. A product according to claim 1, characterised in that the monomer from (a) is a lactone comprising 5 to 7 carbon atoms, preferably caprolactone.

3. A product according to claim 1 or 2, characterised in that the monomer from (b) is a cyclic dimeric ester of an α-hydroxyacid, preferably L-Lactide.

4. A product according to any of the preceding claims, characterised in that its viscosity is up to 1000cps and the mole ratio of (a) to (b) is greater than 1.8:1.

5. A process for the production of a pourable liquid by the reaction of
(a) a lactone or corresponding aliphatic hydroxyacid
(b) cyclic dimeric ester of an α-hydroxyacid or the corresponding α-hydroxyacid together with an alkanepolyol initiator at a temperature of from between about 120 to about 200C in the presence of a catalyst,
characterised in that the mole ratio of lactone or corresponding aliphatic hydroxyacid to cyclic dimeric ester of an α-hydroxyacid or the corresponding α-hydroxyacid is greater than 1.5 : 1 and that the mixture contains sufficient initiator that the viscosity of the polymer produced is less than 2000cps.

6. A process according to claim 5, characterised in that a vacuum sparge at a temperature of between 60 to 100C, preferably of between 70 to 90C, is applied to the reaction mixture prior to addition of the catalyst for a period of from 1 to 2 hours.

7. A process according to claim 5 or 6, characterised in that reaction is carried out at a temperature of between 150 to 185C for a period of 18 to 35 hours.

8. A polyurethane derivable from co-polymers of
(a) a lactone or corresponding aliphatic hydroxyacid
(b) cyclic dimeric ester of an α-hydroxyacid or the corresponding α-hydroxyacid
said co-polymers then being reacted with one or more polyisocyanates, characterised in that the weight ratio of lactone or corresponding aliphatic hydroxyacid to cyclic dimeric ester of an α-hydroxyacid or the corresponding α-hydroxyacid is greater than 1.5 : 1 and that the viscosity of the co-polymer is less than 2000cps.

9. A polyurethane according to claim 8, characterised in that the monomer from (a) is a lactone comprising 5 to 7 carbon atoms, preferably caprolactone, and in that the monomer from (b) is a cyclic dimeric ester of an α-hydroxyacid, preferably L-Lactide.

10. A polyurethane according to claim 8 or 9, characterised in that the co-polymer section has a viscosity of 500 to 1000cps.

11. A process for the preparation of a polyurethane wherein a polyol is reacted with a polyisocyanate in the presence of a chain extender and a catalyst at elevated temperature, characterised in that the polyol is a co-polymer of
(a) a lactone or corresponding aliphatic hydroxyacid
(b) cyclic dimeric ester of an α-hydroxyacid or the corresponding α-hydroxyacid,
(c) an alkanepolyol initiator
and that the mole ratio of lactone or corresponding aliphatic hydroxyacid to cyclic dimeric ester of an α-hydroxyacid or the corresponding α-hydroxyacid in the co-polymer is greater than 1.5 : 1 and that the mixture contains sufficient initiator that the viscosity is less than 2000cps.
